# EUROPEAN PATENT APPLICATION

(11) **EP 1 985 716 A2**
(43) Date of publication of application: **29.10.2008**
(21) Application number: 07012104.1
(22) Date of filing: 20.06.2007
(51) Int. Cl.: C21D 9/52, C21D 9/60

(54) **Apparatus and method for continuously processing long bar by heat treatment using induction heating**

(30) Priority: 27.04.2007 US 741120
(71) Applicant: Park, Chun Young, Woobang songhyeon Heights 906 Songhyeon-dong, Dalseo-gu Daegu 704-340 (KR)
(72) Inventor: Park, Chun Young, Woobang songhyeon Heights 906 Songhyeon-dong, Dalseo-gu Daegu 704-340 (KR)
(74) Representative: Scheele, Friedrich

(57) **Abstract**

Provided is an apparatus and method for continuously processing a long bar by heat treatment using induction heating. The method includes checking and preparing carbon steel and low-alloy steel material 1; feeding the prepared material 1 into a continuous induction-heating quenching furnace 10, heating the material 1 at a temperature of 860 °C to 900 °C, spraying a cooling water on the heated material 1, and completely quenching the material 1; horizontally conveying the quenched material 1 by an automatic conveyor unit 20; feeding the conveyed material 1 into a continuous induction-heating tempering furnace 30, heating the material 1 at a temperature of 550 °C to 690 °C, and completely tempering the material 1; checking the tempered material 1 and correcting a deformed part of the tempered material 1; and relieving stress from the corrected material 1 and finally checking the material 1.

## Description

### BACKGROUND OF THE INVENTION

### Field of the invention

The present invention relates to a heat processing apparatus and method, and more particularly, to an apparatus and method for processing a long bar by heat treatment, for manufacturing ship stay bolt and stud bolt, heavy-equipment pin, tie bar, anchor bolt, and LM-guide. Much more particularly, the present invention relates to an apparatus and method for continuously processing a long bar by heat treatment using induction heating, for cooling and quenching a heated material by a continuous induction-heating quenching furnace, feeding the heated material into a continuous induction-heating tempering furnace by an automatic conveyor unit, and tempering the fed material by the continuous induction-heating tempering furnace to thereby continuously process a small-diameter material and a large-diameter material, thereby improving productivity and improving structural and mechanical properties by uniform heating.

### Description of the Background Art

In general, heat treatment is a process of heating metal material to a temperature below melting point and selectively controlling a cooling speed of the metal material, thereby enabling the metal material to have required structure and property. As heat treatment, there are quenching, annealing, normalizing, and tempering.

Heat treatment gives metal or alloy a required property, i.e., a general performance such as strength, hardness, wear resistance, impact resistance, processability, and magnetic property, and processes metal adaptive to its use.

In general, heat treatment has been implemented in such a manner that an elongate rod is fed into a jig and a basket and is heated in a general pit and car type furnace, considering deformation, and is cooled by a dipping way in a conventional manufacturing method of quenching and processing a long bar and a round bar by heat treatment to manufacture a pin and a bolt tie bar for ship or heavy equipment.

However, the manufacturing method has a great difficulty in manufacturing the long bar in a desired shape because the completed long bar is essentially deformed depending on heat gradient when it is quenched. The manufacturing method has a drawback that an amount of production reduces and thus a loss of cost and time is caused because it performs a discontinuous process in such a manner that one material is fed and is discontinuously quenched and tempered and then, another material is again fed and is processed by heat treatment after one process is completely terminated.

### SUMMARY OF THE INVENTION

Accordingly, the present invention is to provide an apparatus and method for continuously processing a long bar by heat treatment using induction heating, for rapidly cooling and quenching material heated at 860°C to 900°C by a continuous induction-heating quenching furnace, feeding the material into a continuous induction-heating tempering furnace by an automatic conveyor unit, and tempering the material at 550°C to 690°C by the continuous induction-heating tempering furnace, thereby continuously processing a long bar of any diameter and any length by heat treatment and improving productivity compared to a conventional heat processing system performing a discontinuous process.

Also, the present invention is to provide an apparatus and method for continuously processing a long bar by heat treatment using induction heating, for improving structural and mechanical properties based on a heat gradient and enhancing a uniform heating effect by a small heat transfer area of a heated part by installing several inductive coils whose diameter is greater by 10% than that of the long bar within a continuous induction-heating furnace so that material is wholly uniformly heated, passing through the coils.

The present invention provides an apparatus and method for continuously processing a long bar by heat treatment using induction heating, for cooling and quenching a heated material by a continuous induction-heating quenching furnace, feeding the heated material into a continuous induction-heating tempering furnace by an automatic conveyor unit, and tempering the fed material by the continuous induction-heating tempering furnace to thereby continuously process a small-diameter material and a large-diameter material, thereby improving productivity and improving structural and mechanical properties by uniform heating.

The present invention provides a method for continuously processing a long bar by heat treatment using induction heating. The method includes checking and preparing carbon steel and low-alloy steel material 1; feeding the prepared material 1 into a continuous induction-heating quenching furnace 10, heating the material 1 at a temperature of 860 °C to 900 °C, spraying a cooling water on the heated material 1, and completely quenching the material 1; horizontally conveying the quenched material 1 by an automatic conveyor unit 20; feeding the conveyed material 1 into a continuous induction-heating tempering furnace 30, heating the material 1 at a temperature of 550 °C to 690 °C, and completely tempering the material 1; checking the tempered material 1 and correcting a deformed part of the tempered material 1; and relieving stress from the corrected material 1 and finally checking the material 1. Thus, the method completes a heat treatment of a long bar formed of a small-diameter material and a large-diameter material.

It is to be understood that both the foregoing general description and the following detailed description are exemplary and explanatory and are intended to provide further explanation of the invention as claimed.

### BRIEF DESCRIPTION OF THE DRAWINGS

The invention will be described in detail with reference to the following drawings in which like numerals refer to like elements.

FIG. 1 is a flowchart illustrating a procedure of the present invention;

FIG. 2 is a diagram illustrating a whole apparatus of the present invention;

FIG. 3 is an exploded perspective diagram illustrating a continuous induction-heating quenching furnace according to the present invention;

FIG. 4 is a perspective diagram illustrating an operation state of the present invention; and

FIG. 5 is a side sectional diagram illustrating an operation state of the present invention.

### DETAILED DESCRIPTION OF PREFERRED EMBODIMENTS

Preferred embodiments of the present invention will be described in a more detailed manner with reference to the drawings.

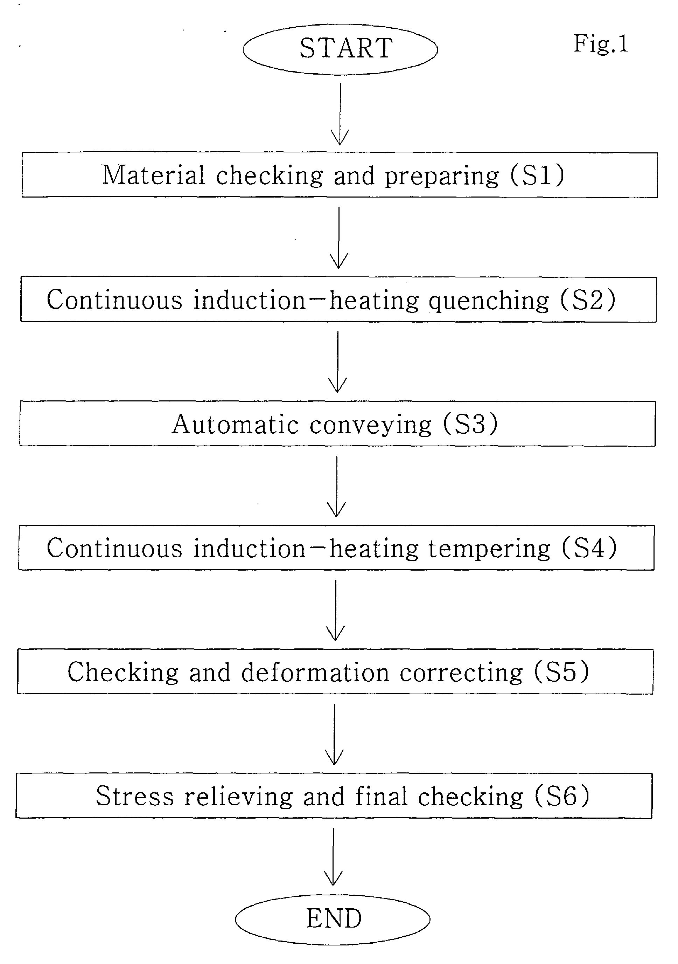

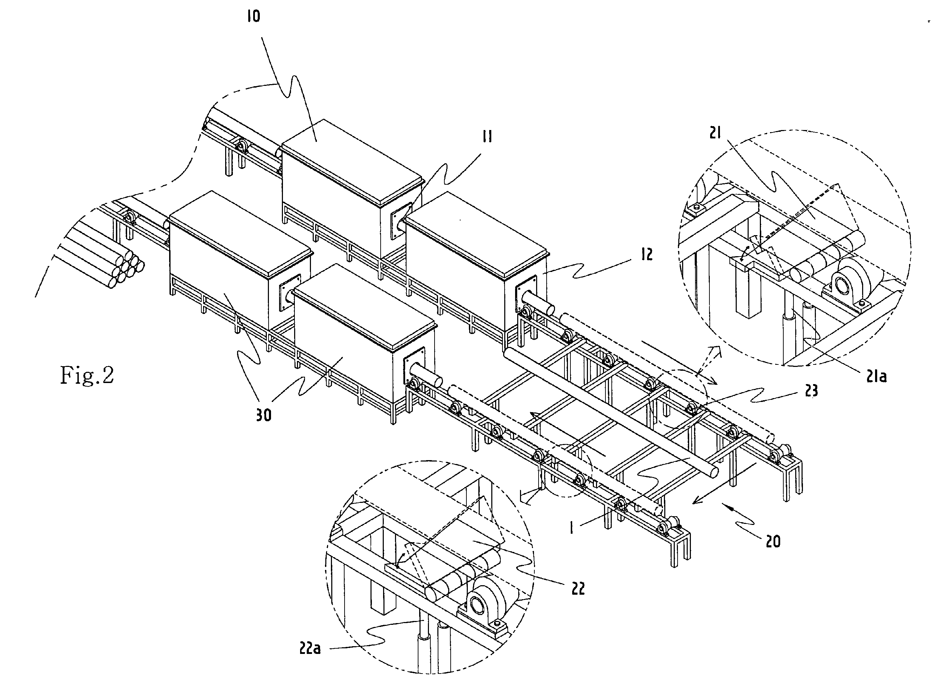

FIG. 1 is a flowchart illustrating a procedure of the present invention. FIG. 2 is a diagram illustrating a whole apparatus of the present invention. As shown, first process is a material checking and preparing step (S1) of checking a circular rod shaped material 1 formed of carbon steel and low-alloy steel and preparing the material 1 by controlling a length of the material 1 and the like adaptively to a work environment.

The used material 1 uses carbon steel and low-alloy steel concurrently added with carbon (C), chrome (Cr), molybdenum (Mo), and nickel (Ni). In detail, the material 1 mainly contains chrome (Cr) of about 1 %, molybdenum (Mo) of about 0.15 % to 0.3 %, carbon (C) of about 0.2 % to 0.45 %, and nickel (Ni) of about 1.6 % to 2.2 %. The material 1 has a structure suitable for ship stay bolt and stud bolt, heavy-equipment cylinder rod and pin, extruder tie bar, and anchor bolt needing a property of firmness, and other industrial parts.

Second process is a continuous induction-heating quenching step (S2) of feeding the prepared material 1 to a continuous induction-heating quenching furnace 10 and quenching the material 1 by heating and rapidly cooling the material 1.

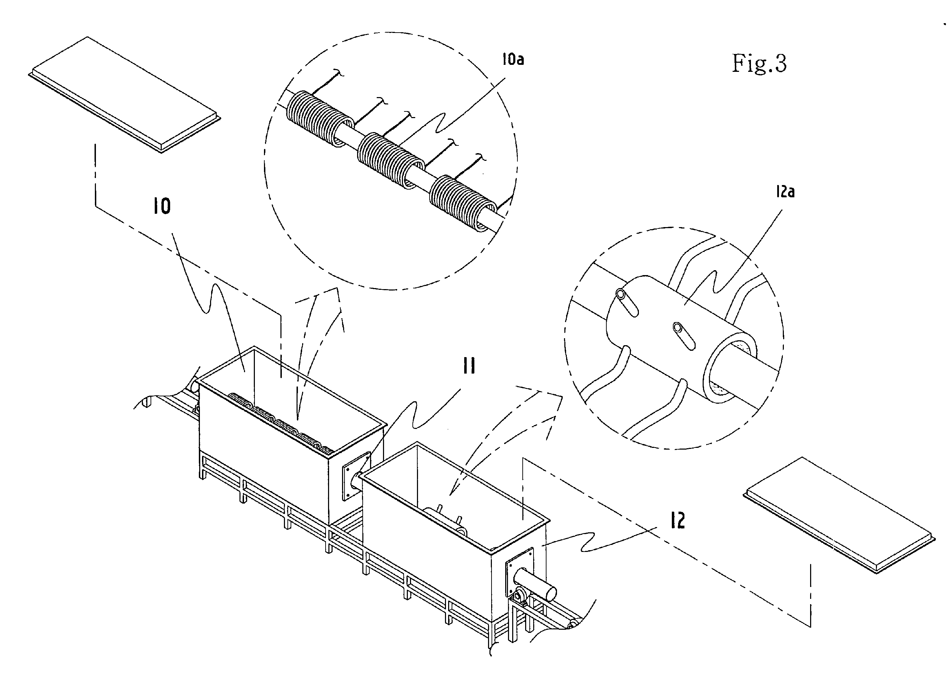

Construction of the continuous induction-heating quenching furnace 10 is shown in FIG. 3. The continuous induction-heating quenching furnace 10 has a plurality of inductive coils 10a inside. A heating passageway 11 and the inductive coil 10a have diameters greater 10 % or more than that of the material 1 passing through them. Thus, the material 1 is heated, passing through, without contact with the inductive coil 10a. Thus, the material 1 is uniformly heated at surface and interior because it has a uniform heat distribution and a small heat transfer area of its heated part.

The material 1 is heated at a temperature of 860°C to 900°C at a speed of 90 mm to 550 mm per a minute in the continuous induction-heating quenching furnace 10. After that, the material 1 is cooled using a cooling unit 12 that is installed adjacently to the continuous induction-heating quenching furnace 10. The cooling unit 12 has a cylindrical shaped spray 12a inside. Thus, the cooling unit 12 momentarily, powerfully sprays a cooling water having a temperature of 40°C on the material 1 and rapidly cools the material 1, thereby enhancing a quenching effect.

A quenching condition depending on a size of the material 1 is shown as follows.

| Size (Φ) mm | Quenching temp. (°C) | Speed (mm/min) | Cooling water temp. (°C) | coolant |
|---|---|---|---|---|
| 40 to 100 | 860 to 900 | 540 to 555 | 40 | Water |
| 100 to 160 | | 350 to 530 | | |
| 160 to 200 | | 90 to 300 | | |

Third process is an automatic conveying step (S3) of conveying the quenched material 1 for a tempering process described later, in detail, feeding the material 1 out of the continuous induction-heating quenching furnace 10 and horizontally conveying the material 1 toward a continuous induction-heating tempering furnace 30 by an automatic conveyor unit 20.

The automatic conveyor unit 20 is of a shape of a table in which it is positioned at an outlet of the continuous induction-heating quenching furnace 10 and an inlet of the continuous induction-heating tempering furnace 30. When the quenched material 1 is put in place on an upper end at one side of the conveyor unit 20, a conveyor plate 21 connecting with a cylinder 21a elevates to the same height as that of a slope 23. Thus, the material 1 moves to the conveyor plate 21. When the conveyor plate 21 descends, the material 1 is rolled toward the slope 23 and is conveyed to the other side of the automatic conveyor unit 20.

The thus conveyed material 1 is put in place on an acceptance plate 22 connecting with a cylinder 22a provided at the other side of the automatic conveyor unit 20. As the acceptance plate 22 descends by operation of the cylinder 22a, the material 1 is safely mounted on the automatic conveyor unit 20 and is conveyed into the continuous induction-heating tempering furnace 30 described later.

Fourth process is a continuous induction-heating tempering step (S4) of feeding the material 1, which is conveyed by the automatic conveyor unit 20, to the continuous induction-heating tempering furnace 30 and tempering the material 1 to reduce hardness and increase viscosity.

The continuous induction-heating tempering furnace 30 performs transformation or precipitation of a structure formed during the second process and makes the structure almost stable. In order to acquire tempering property and state, the material 1 is heated at a temperature of 550°C to 690°C and then is slowly cooled at a speed of 60 mm to 250 mm per a minute, thereby stabilizing the structure of the material 1.

A tempering condition depending on a size of the material 1 is shown as follows.

| Size (Φ) mm | Tempering temp. (°C) | Speed (mm/min) |
|---|---|---|
| 40 to 100 | 550 to 690 | 233 to 250 |
| 100 to 160 | | 200 to 233 |
| 160 to 200 | | 60 to 200 |

After that, fifth process is a checking and deformation correcting step (S5) of checking a physical property and an external shape of the heat-treated material 1 and correcting a deformed part when it is generated.

Lastly, sixth process is a stress relieving and final checking step (S6) of, after the checking and correcting of the deformed part, performing stress relief annealing, in detail, relieving a residual stress from the material 1 to thereby prevent the distortion, dimensional variance, crack, and break of the material 1, which may occur in a later-treatment process, and finally checking the material 1. By doing so, the procedure of the present invention is completed.

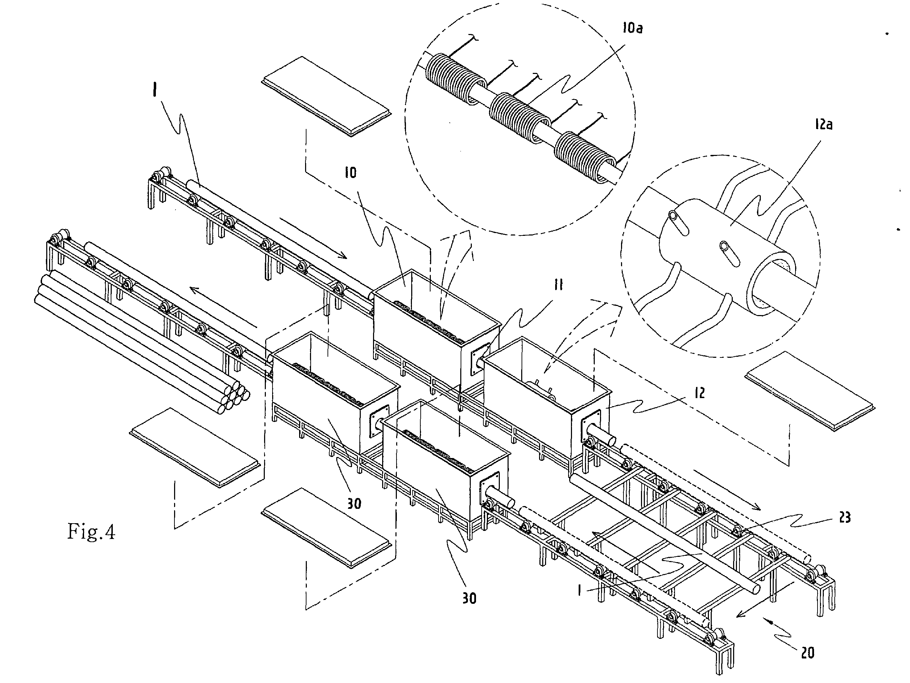

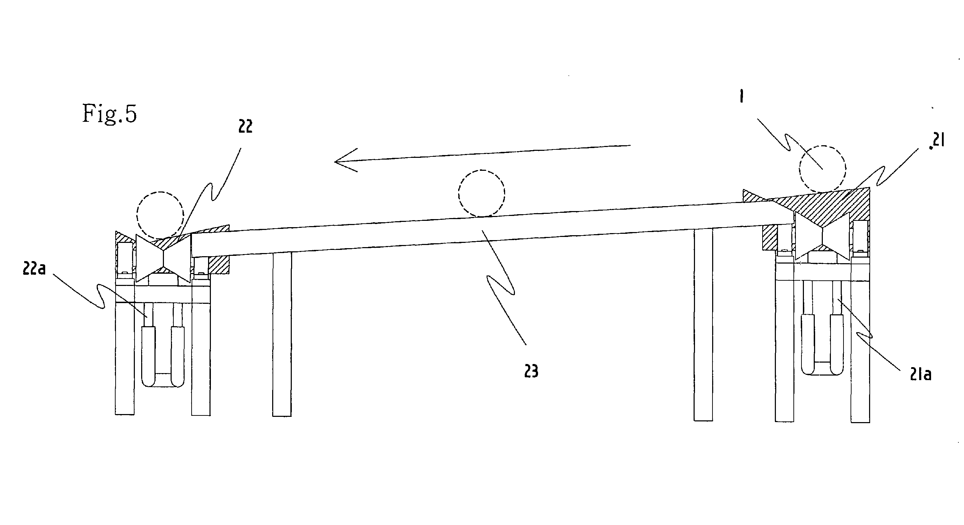

Operation states according to an exemplary embodiment of the present invention will be described with reference to FIGS. 4 and 5. As shown, a circular rod shaped material 1 having a diameter of about 200 mm is fed to the continuous induction-heating quenching furnace 10. If the fed material 1 is heated at a temperature of 860 °C to 900 °C and conveyed at a speed of 150 mm per a minute by the inductive coil 10a installed within the continuous induction-heating quenching furnace 10, the heated material 1 is rapidly cooled by spraying a cooling water having a temperature of 40 °C, and is completely quenched.

After that, after the quenching is completed, the material 1 is disposed at one side of the automatic conveyor unit 20. If the conveyor plate 21 elevates and descends by the cylinder 21a and thus, the material 1 rolls toward the slope 23, the material 1 conveyed along the slope 23 is disposed on the acceptance plate 22 of the automatic conveyor unit 20. The operation of the cylinder 22a connecting with the acceptance plate 22 results in descending of the acceptance plate 22 so that the material 1 can be disposed on the other side of the automatic conveyor unit 20.

Next, the material 1 disposed at the automatic conveyor unit 20 is fed into the continuous induction-heating tempering furnace 30 and is conveyed at a temperature of 620 °C and at a speed of 120 mm per a minute, and is completely tempered for the stable structure.

The tempered material 1 is corrected when it is checked that there is the deformed part. The material 1 is relieved from stress and is finally checked, thereby completing the operation of the present invention.

As described above, the present invention rapidly cools and quenches the material heated at 860°C to 900°C by the continuous induction-heating quenching furnace, feeds the material to the continuous induction-heating tempering furnace by the automatic conveyor unit, and tempers the material at 550°C to 690°C by the continuous induction-heating tempering furnace, thereby continuously processing the long bar of any diameter and any length by heat treatment and improving productivity compared to a conventional heat processing system performing a discontinuous process.

Also, the present invention improves the structural and mechanical properties based on a heat gradient and enhances a uniform heating effect by the small heat transfer area of the heated part by installing several inductive coils whose diameter is greater 10% than that of the long bar within the continuous induction-heating furnace so that the material is wholly uniformly heated, passing through the coils.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for continuously processing a long bar by heat treatment using induction heating, the method comprising:
checking and preparing carbon steel and low-alloy steel material 1;
feeding the prepared material 1 into a continuous induction-heating quenching furnace 10, heating the material 1 at a temperature of 860 °C to 900 °C, spraying a cooling water on the heated material 1, and completely quenching the material 1;
horizontally conveying the quenched material 1 by an automatic conveyor unit 20;
feeding the conveyed material 1 into a continuous induction-heating tempering furnace 30, heating the material 1 at a temperature of 550 °C to 690 °C, and completely tempering the material 1;
checking the tempered material 1 and correcting a deformed part of the tempered material 1; and
relieving stress from the corrected material 1 and finally checking the material 1,
whereby the method continuously processes a small-diameter material and a large-diameter material by heat treatment, thereby improving productivity and improving structural and mechanical properties by uniform heating.

2. An apparatus for continuously processing a long bar by heat treatment, the apparatus comprising:
a continuous induction-heating quenching furnace 10 being of a rectangular container shape and having circular shaped inductive coils 10a provided inside at a constant interval; and
a cooling unit 12 being of a rectangular container shape and having a cylindrical shaped spray 12a provided inside,
whereby the apparatus continuously processes a circular rod shaped material 1 by heat treatment.

3. An apparatus for continuously processing a long bar by heat treatment using induction heating, the apparatus comprising:
a continuous induction-heating quenching furnace 10 for feeding a circular rod shaped material 1 having a diameter of 40 mm to 200 mm and conveying and heating the material 1 at a speed of 90 mm to 555 mm per a minute and at a temperature of 860 °C to 900 °C by an inductive coil 10a installed inside the continuous induction-heating quenching furnace 10;
a cooling unit 12 for spraying a cooling water having a temperature of 40 °C on the heated material 1 by a spray 12a and cooling the heated material 1;
an automatic conveyor unit 20 for, when the quenched material 1 is put in place, rolling and conveying the material 1 on a slope 23 by elevating and descending a conveyor plate 21 by a cylinder 21a, and completely conveying the material 1 using an acceptance plate 22; and
a continuous induction-heating tempering furnace 30 for feeding the conveyed material 1 and heating and tempering the material 1 to a stable structure,
whereby the apparatus continuously processes a small-diameter material and a large-diameter material by heat treatment.

4. The method of claim 3, wherein when the circular rod shaped material 1 is conveyed by the automatic conveyor unit 20 and is fed into the continuous induction-heating tempering furnace 30, the continuous induction-heating tempering furnace 30 conveys and heats the material 1 at a speed of 60 mm to 250 mm per a minute and at a temperature of 550 °C to 650 °C and tempers the material 1 to change the material 1 into the stable structure.
